# EUROPEAN PATENT APPLICATION

(11) **EP 3 845 323 A1**
(43) Date of publication of application: **07.07.2021**
(21) Application number: 20150122.8
(22) Date of filing: 02.01.2020
(51) Int. Cl.: B09B 3/00, D01G 11/00, D06B 5/08, D06B 19/00, D06L 4/40

(54) **APPARATUS FOR DECONSTRUCTING TEXTILE WASTE MATERIALS**

(71) Applicant: Nunn, Kayren Joy, Arlington TX 76017 (US)
(72) Inventor: Nunn, Kayren Joy, Arlington TX 76017 (US)
(74) Representative: Lecomte & Partners

(57) **Abstract**

An apparatus for treating textile waste materials includes a porous conveyor belt adapted to convey textile materials to be treated, a first zone for applying steam to textile materials to be treated, comprising at least one nozzle either above a location where the textile materials would be conveyed, below the porous conveyor belt at a location where the textile materials would be conveyed, or both a second zone for applying one or more chemical or enzymatic treatments to textile materials to be treated including at least one nozzle either above a location where the textile materials would be conveyed, and a vacuum system below the porous conveyor belt at a location where the textile materials would be conveyed, and at least one vacuum system either above a location where the textile materials would be conveyed, and at least one nozzle below the porous conveyor belt at a location where the textile materials would be conveyed.

## Description

### Technical Field

The present invention is generally in the field of equipment for rejuvenating textile waste by creating and manufacturing quality fiber useful for downstream applications.

### Background Art

When textile waste materials are recycled, waste fabrics typically undergo a deconstruction process in which the fabrics are torn by tearing drums to form shoddy fibers. The tearing drums are usually run at high velocity for increased productivity, and are typically not temperature controlled.

Cotton fibers are sensitive to heat, and tend to break into shorter fibers and/or dust in the process. Polypropylene fibers, polyester fibers and other heat-sensitive fibers tend to fuse, resulting in relatively poor performance and quality characteristics.

The short, dusty, broken and frayed fibers resulting from this type of process typically only find use in manufacturing low-quality end-products, whose functions have typically been acoustical, insulating or padding.

### Summary of the Invention

Overall, the invention relates to equipment useful for deconstructing textile waste materials. Textile waste materials often include a surface finish, which can be present, or which can be removed, before being deconstructed.

The present invention also provides methods for deconstructing waste materials, and treated fibers produced by deconstructing waste textile materials using the methods and apparatuses described herein.

The invention is based in part on the understanding that higher quality fibers can be obtained by deconstructing textile waste materials that are exposed to steam to open up the fibers than those which the fibers have not been opened up by steam, by using cutting needles versus pins to separate the fibers from the textile materials, and by controlling the temperature. Also, in those embodiments where the textile materials are conveyed without using a fan, the apparatus can reduce damages to the individual fibers during the
deconstruction process relative to where a fan is used.

In one embodiment, an apparatus for treating textile waste materials with one or more chemical treatments is provided. The overall process typically involves applying steam to the textile waste materials to open up the fibers, particularly when the fibers are cotton or other natural fibers. Once the fibers are opened up, they can be treated with one or more chemical and/or enzymatic treatments. These treatments can, in some embodiments, assist with the subsequent deconstruction of the fibers. In other embodiments, the treatments can impart advantageous chemical and/or physical properties to the treated fibers.

The apparatus for applying chemical treatments includes a porous conveyor belt, a first zone where steam is applied, and a second zone where a chemical or enzymatic treatment is applied.

In one embodiment, steam is applied from above the textile materials and from below the conveyor. The steam can be applied using two or more nozzles at least one of which is on each side (i.e., above the textile materials and below the conveyor belt). In a second embodiment, steam is applied only from above the textile materials or from below the conveyor belt. In one aspect of the second embodiment, steam is applied on one side, and a vacuum is pulled on the other side, for example, using one or more nozzles.

After steam has loosened up the fibers in the textile material, the average moisture content is typically in the range of between around 10 and around 30 percent by weight of the fibers, more typically in the range of between about 12 and around 15 percent by weight of the fibers.

The fibers are then subjected to a chemical and/or enzymatic treatment. The treatment can be applied from above the textile materials, or from beneath the conveyor, for example, using one or more nozzles. A vacuuming unit is present on the opposite size of where the treatment is provided. That is, if the treatment is applied from on top of the textile materials, a vacuuming unit is located beneath the conveyor. If the treatment is applied from underneath the conveyor, a vacuuming unit is located above the textile materials. Because a vacuum is being pulled through the textile materials as they are treated, the treatment can be more uniformly distributed than if it is merely sprayed on top of the textile material or underneath the conveyor.

Each treatment station comprises at least one conveyor, which can be an inlet conveyor. The inlet conveyer can be the only conveyer in each treatment station, or each treatment station can, independently, further include one or more additional conveyors.

One of these additional conveyors can be a treatment station conveyor, which is adapted to receive material from the inlet conveyor and to convey the material from one position within the treatment station to a second position, either within the treatment station, or outside of the treatment station.

If the treatment station conveyor conveys the material to a second position within the treatment station, then the treatment station further comprises an outlet conveyor. An intermediate conveyor can be present, to convey textile materials from the outlet of a treatment/deconstruction station, through a treatment/deconstruction station, and on to another treatment/deconstruction station.

At least one of the conveyors in each treatment station is porous, so that when liquids are applied to the material being treated, excess liquids can pass through the conveyor. The conveyor should be non-reactive or substantially non-reactive to any chemicals used to treat the material.

If there is only one conveyor in the treatment station, which conveyor is
the inlet conveyor, then the inlet conveyor is porous. If the treatment station comprises a treatment station conveyor, then the treatment station conveyor is porous, and the inlet conveyor may or may not be porous. If the treatment station further comprises an outlet conveyor, the outlet conveyor may or may not be porous.

Material to be treated passes onto a conveyor, as described above, where the conveyor travels through a treatment zone in each treatment station. One or more nozzles is disposed above the appropriate conveyor, and these nozzles are adapted to deliver one or more treatment compositions to materials being conveyed through the treatment station.

Where a chemical treatment is to be applied from above the textile materials, a vacuuming unit is disposed below whichever conveyor is conveying the material to be treated through the treatment station. Where the conveyor is in the form of a continuous loop, the vacuuming unit is disposed between the top and bottom of the loop. Where the conveyor has a top and bottom surface, which top surface is in contact with material being treated, the vacuum is disposed on the bottom surface of the conveyor.

The vacuuming unit is adapted to draw the one or more treatment compositions delivered from the nozzle(s)s through the textile materials as such compositions pass through the material onto the conveyor. In one embodiment, the vacuuming unit comprises a vacuum pump, a condensation coil, or both.

Each treatment station further includes a pump for pumping a desired treatment composition through the nozzle(s). As discussed elsewhere herein, the pump can be controlled, for example, using a central computer unit (or central processing unit/CPU), which can control the type and deposition rate of a desired treatment composition through the nozzle(s) in any given treatment station.

Each treatment station optionally further includes a condensation collection unit, which collects condensates in the treatment station resulting from condensation of the treatment compositions delivered from the nozzle(s) and not collected by the vacuum unit. This can be particularly useful where the chemical treatment is applied in vapor form.

Each treatment station also optionally, but preferably, includes a temperature regulating means to regulate the temperature of the treatment station. The temperature inside the treatment station can be monitored using one or more temperature gauges, thermocouples, thermometers, and/or thermostats. The temperature within each treatment station can be controlled, for example, using water, air, a refrigerant, and the like, which can be passed, for example, through heating and/or refrigeration units, including heat pumps.

In one aspect, the treatment station optionally includes a generator unit, which connects with the condensation collection unit. The generator unit transfers heat from the condensates collected in the condensation collection unit, and uses the transferred heat to generate steam, which can be super-heated steam. The steam can be used to power operations of the treatment station, for example, by generating electricity, or can be used to provide heat to one or more of the treatment/deconstruction stations.

In another embodiment, the present invention provides an apparatus which deconstructs textile waste materials, and which produces fibers with enhanced quality relative to where tearing drums are used. The apparatus, referred to herein as a deconstruction station, comprises multiple rotary drums, which can be the same size, or can be of different sizes. Each rotary drum has a curvilinear surface disposed with a plurality of rows of cutting needles.

In one aspect of this embodiment, a first rotary drum is disposed on top of and facing a second rotary drum, and the rows of cutting needles on the curvilinear surfaces of the first rotary drum and the second rotary drum interpose with each other. A motor is present to rotate each drum. In use, the first rotary drum and the second rotary drum are driven to rotate in opposite directions, at a designated speed, which can be a predetermined speed, and the textile materials are passed there between. The cutting needles penetrate the textile materials, and cut through to yarn segments, dividing the yarn segments into long pieces of yarn.

In another aspect of this embodiment, three or more rotary drums are present. The drums are oriented in such a way that they do not interfere with each other. For example, where there are three drums, they can be located in a circular orientation such that each lies roughly sixty degrees from the others, with the open portions of the drums where the cutting needles are exposed facing the open portions of the other drums. Where are four drums, they can be located in a circular orientation such that each lies roughly forty five degrees from the others, and so on for larger numbers of drums.

In one aspect of this embodiment, the cutting needles each have a cutting portion having at least one cutting edge oriented to face a direction where the textile materials are conveyed to the first rotary drum and the second rotary drum to slice into the textile materials and deconstruct the textile materials without causing significant damage to fibers in the textile materials.

In another aspect of this embodiment, the cutting needles each have a flat shaped base portion below the cutting-edge portion. This flat shaped base portion can be used to connect the cutting needles to the first rotary drum and the second rotary drum, respectively.

The size of the rotary drums used in the apparatus described herein can be, but need not be smaller than the rotary drum used in prior art deconstruction methods, because the apparatus uses multiple rotary drums which face each other, and rotate in opposite directions, rather than one large rotary drum as was used in the prior art. The large rotary drums in the prior art were designed to operate at high speeds to achieve maximum production, but those high speeds created relatively high temperatures. When the metal pins and lags on the rotary drums were not cooled, fiber breakage occurred, producing relatively short, dusty fibers which cannot be used in high value applications. The cutting needles present in the rotary drums in the apparatus described herein are also different from the round pins on the rotary drums in the prior art; the cutting needles slice into the textile materials and deconstruct the textile materials without significant damage to the fibers of the textile materials, while the round pins only tear the textile materials without actually separating the individual fibers of the textile materials.

The drums are ideally temperature-controlled to minimize degradation, breakage and/or melting of the textile materials and resulting recovered fibers. In one embodiment, a temperature controlling means, such as a thermostat, thermocouple, or thermometer, along with a source of heating or cooling, can be disposed inside each of rotary drums. The temperature controlling means allows the user to monitor and control the temperature of one or more rotary drums. In one aspect of this embodiment, the temperature can be maintained within a few degrees of a designated or pre-determined temperature. One representative way to control the temperature the rotary drums is to provide a core inside the rotary drums, which core is cooled using water, air, a refrigerant, and the like. One representative way to monitor the temperature in the rotary drums is to install one or more temperature gauges, thermocouples, thermometers, and/or thermostats, on the rotary drums, or in the core.

In comparison with the prior art deconstruction techniques, which used relatively high densities of tearing pin populations to create short, dusty, broken and frayed fibers, the apparatus described herein can deconstruct and rejuvenate waste fabrics in a way that preserves the integrity of the original fibers that were used to construct them, as well as
the textile yarns and resulting fabrics.

In another embodiment, an apparatus is disclosed which includes at least one treatment station and at least one deconstruction station. In one aspect of this embodiment, a treatment station and a deconstruction station are housed in one enclosure, which enclosure includes an inlet to receive textile materials to be treated and deconstructed, and an outlet to output the fibers derived from the treated and deconstructed textile materials. In another aspect of this embodiment, there is a separate enclosure for a treatment station and a deconstruction station.

While the exact method of conveying textiles in and out of the treatment and deconstruction stations is not the key to the invention as described herein, described below are certain ways to convey textiles into and out of the apparatus, and, more specifically, into and out of each separate treatment/deconstruction station. Each of the stations can include an inlet conveyor. Where the treatment and/or deconstruction station follows the feedbox conveyor, then the inlet conveyer is adapted to receive material from the feedbox conveyor. Where the treatment and/or deconstruction station follows a previous treatment/deconstruction station, then the inlet conveyer is adapted to receive material from the outlet conveyor of the previous treatment/ deconstruction station.

In some aspects, the inlet conveyor in a treatment/deconstruction station also functions as an outlet conveyor, in that the material travels into and out of the station on a single conveyor. In other aspects, the station comprises both an inlet conveyor and an outlet conveyor.

The inlet conveyor conveys textile materials outputted from the feedbox conveyor, or the outlet conveyor of a previous treatment/deconstruction station, to either a subsequent treatment/deconstruction station, or, if the treatment and/or deconstruction is complete, to the outside of the apparatus. For example, the treated/deconstructed material can be conveyed to a separate storage container, can be separated by density into relatively high density and relatively low density materials, or can be sent to a refinement station for further refinement.

The final output of the treatment/deconstruction station(s) is typically a chemically- treated fiber.

Depending on the type of textile material to be deconstructed, and the quality of the product that is desires, different embodiments of the apparatus described herein can include different numbers of treatment and/or deconstruction stations. However, the apparatus comprises at least one of each type ofstation.

In one embodiment, the apparatus comprises at least two deconstruction stations. In one aspect of this embodiment, the spacing between the cutting needles in each of the plurality of rows of cutting needles of a subsequent treatment and deconstruction station is less than that of each previous deconstruction station. In this manner, each subsequent deconstruction station delivers a finer yarn segment, until single soft yarn segments are delivered at a final deconstruction station.

The apparatus comprises at least one outlet conveyor, which conveys treated and deconstructed textile materials out of the last of the series of treatment and deconstruction stations to a desired location, such as an output storage box or a station where the material can be further refined.

In one embodiment, the apparatus further comprises a redeposit mechanism at the outlet conveyor which separates the textile materials on the outlet conveyer into a first group comprising textile materials of a relatively lighter weight or relatively lower density, which in one aspect have subsequently been converted into a finished yarn, and a second group comprising textile materials of a relatively heavier weight or relatively higher density. In one aspect of this embodiment, the higher density materials have not been converted into a finished yarn, so require further treatment and deconstruction. The relatively higher weight or higher density materials can be transferred to a designated previous treatment and deconstruction group, using a redeposit mechanism, and the first group of the textile materials can be transferred to subsequent treatment and deconstruction group or the output storage box.

In one aspect, the redeposit mechanism comprises a covered area at the outlet conveyor, and further comprises a suctioning means disposed at a top end of the covered area and a conveyor, a source of suction, such as a vacuum hose, or other means for removing material as it is separated.

In use, while the outlet conveyor is in motion at the covered area, a suctioning means can be used to suction the textile materials on the outlet conveyor and separate them by virtue of their relative weights and/or densities. The suctioning means can be located towards the top end of the covered area, leaving the textile materials which are relatively heavy in weight or relatively high in density on the outlet conveyor. The relatively heavy material can be moved, for example, to a backward conveyor which conveys the textile materials thereon to a designated previous treatment and deconstruction station where it is further treated and/or deconstructed into a fibrous state. The suctioning means can then be switched off to release the suctioned relatively light weight or low density textile materials to the outlet conveyor for conveying to a subsequent destination.

The apparatus further comprises a centralized computer controller or central processing unit (CPU). This controller controls one or more of the functions of the apparatus. Representative functions which can be controlled include, but are not limited to, the type of treatment compositions delivered by the nozzles, the application rate of the treatment compositions delivered by the nozzles, the size of the cutting blades, the temperatures of the treatment station, the first rotary drum and/or the second rotary drum, the speed of rotation of the first rotary drum and/or the second rotary drum on the basis of the composition of the fabrics.

In one embodiment, the feedbox conveyor, the inlet conveyer of each treatment/deconstruction station, each treatment station conveyer, if present, each intermediate conveyer, if present, and the outlet conveyor form a continuous system for conveying textile materials through the apparatus, from the inlet of the apparatus to the outlet of the apparatus. The continuous system of conveyors can be a variable speed drive belt- driven conveyor system.

In one embodiment, the conveyor in one or more of the treatment stations which underlies the nozzles is in form of a stainless steel mesh, which allows the treatment compositions delivered by the nozzles in the treatment station to pass through the textile materials, and through the conveyor. However, other materials can certainly be used, provided they include a mesh of sufficient size to allow the treatment chemicals to pass through, while not allowing the fibers to pass through.

In one embodiment, one or more of the feedbox conveyor, the inlet conveyor of each treatment and deconstruction station, the intermediate conveyor of each treatment station, if present, and the outlet conveyor one or more of the treatment and/or deconstruction stations, are in form of a PVC mesh belt.

In one embodiment, the textile materials to be deconstructed and treated are conveyed without using a fan. By not using fans to convey the textile materials from one area to another, the apparatus can reduce damages to the individual fibers during the deconstruction process.

In use, the textile materials to be treated are passed through the hopper or feedbox onto a first conveyor, and then into a treatment station, where the fibers in the textile materials are opened up by exposure to steam, and then treated with one or more treatment compositions. Within any given treatment station, one or more treatments can be applied. The treatment compositions can be in the form of a vapor, droplets, a stream of liquid, a dispersion, and the like, though vapor can be preferred.

Collectively, the combination of steam and chemical/enzymatic treatment is referred to herein as "catalyzed vapor treatment." Although the steam is not technically a catalyst, it opens up the fibers and allows them to receive the chemical/enzymatic treatments more efficiently. The water is added in the form of steam, and is removed as the fibers are later isolated, so is not a reactant per se. For this reason, the process has been termed "catalyzed vapor."

The treatments can serve one or more purposes, such as softening and relaxing twists in the waste materials, providing stain resistance, providing resistance to microbial contamination, providing color, fiber strengthening aids, oils to aid in anti static formulation, nanotechnology for finishes on fabrics downstream, antimicrobials to kill microbial contaminants, and surfactants for personal care products. The treatment compositions in the catalyzed vapor treatment can include one or more of an enzyme, such as a cellulase, protease, lipase, pectinase, or amylase enzyme, a surfactant, which can be a cationic, anionic, zwitterionic, or nonionic surfactant, or a silicone treatment. The selection of the treatment depends on the type of textile materials to be treated.

In one embodiment, the textile materials to be treated and/or deconstructed are in the form of a yarn, in which case one or more of the treatment compositions comprises an organic agent which strengthens the yarn element of the textile materials for further processing.

In another embodiment, for example, when deconstructing a cotton fabric, the treatment composition can comprise a surfactant or an enzyme, such as a cellulase enzyme.

The cellulase enzyme functions, for example, by dissolving a portion of the cellulose in the cotton, thereby relaxing the knot holding the textile fabric together, and making it relatively easier for the cutting needles to undo the fabric and form fibers or threads.

When deconstructing a natural hair fabric, such as cashmere or wool, or a polyester, nylon or polypropylene fiber, the treatment composition can comprise a poly (vinylamine- vinylformamide) copolymer, or other demulsifiers, optionally present in a suitable carrier. These compounds can prevent shrinkage and felting of wool or other natural hair fabrics.

In a further embodiment, the treatment composition comprises an anti-microbial application and/or a biocide.

The treatment processes applied in the various treatment stations are designed to increase the strength of the fibers, to ensure they are not being weakened, or create additional breakage during the process.

The treatment is, or treatments are, applied to the textiles using one or more spray nozzles located above the textile materials to be treated or below the porous conveyor. As and after a treatment is applied, whether as a vapor, solution, dispersion, spray, and the like, a vacuum is pulled below the conveyor, or above the textile to be treated, respectively, pulling the treatment through the textile to be treated. Excess treatment chemicals can be collected and recycled, if desired.

The treated, moistened textile material can then pass through the treatment station to a further treatment station to receive a further treatment, or to a deconstruction station. In a deconstruction station, the textile materials are passed between the rotating drums described above, where the cutting needles cut into the materials and split the materials into fibers. It may take two or more deconstruction stations to accomplish a desired level of deconstruction.

After the textile material has been deconstructed to a desired degree, the resulting material, which largely includes separated fibers, can be subjected to further treatments, including those which increase the strength of the fibers, coloring treatments, disinfecting treatments, and the like. When the desired degree of deconstruction and treatment is achieved, the finished material can be transferred through the last of the treatment/deconstruction stations through an outlet conveyor to a redeposit mechanism, a storage container, and/or a refining station capable of providing additional refinements to the finished product, which can be a treated fiber. Further refinements include, for example, converting the treated fiber to a yarn to be made into knits or wovens for apparel, home or industrial applications or a non-woven fabric for use in personal care, baby, automotive, or industrial uses.

The present invention will be better understood with reference to the following detailed description.

### Brief Description of the Figures

Figure 1 is a schematic illustration of an embodiment of the overlap of the cutting needles in rotating drums as they interact with each other when the drums rotate.
Figure 2 is a schematic illustration of an embodiment of steam being applied over a textile material to be treated, and also beneath a conveyor.
Figure 3 is a schematic illustration of an embodiment of a treatment station.
Figure 4 is a schematic illustration of an embodiment of a treatment station and a deconstruction station, connected using conveyors.
Figure 5 is a schematic illustration of an embodiment of a deconstruction station.

### Detailed Description

In one embodiment, the present invention provides an apparatus which deconstructs textile waste materials, and which produces fibers with enhanced quality relative to where tearing drums are used. In another embodiment, the present invention provides methods for deconstructing waste materials. The invention also relates to treated fibers produced by deconstructing waste textile materials.

In one embodiment, the apparatus described herein comprises an initial feedbox/hopper, a feedbox conveyor, one or more than one serially connected treatment and deconstruction groups, an outlet conveyor, and a centralized computer controller.

The apparatus described herein is, on information and belief, counter to all of the current technologies in the recycling equipment marketplace. Typical recycling equipment is built with large diameter rotary cylinders that turn at high rates of speed, and are equipped with metal bars or lags filled with round steel bars or pins that tear fabrics aggressively in succession until the final "cylinder" delivers "shoddy" type, or fibrous material, that is short and dusty at the end of the recycling line of equipment).

On the other hand, the apparatus described herein employs two or more rotary cylinders which are filled with sharp needles that penetrate fabrics and cut through to the yarn segments dividing them into long pieces of yarn.

Whereas previous deconstruction equipment handled the textiles in dry form, without any chemical treatments, the instant methods involve passing the textile materials on to a treatment station, where conditioning
agents are placed on the textile materials which enhance their performance and strength, before and/or after the textile materials are passed through a deconstruction station.

In 1961, Meinke stated in his patent, US 3,098,264 that "heat makes fiber shorter and it becomes unusable." But the equipment developed heretofore has been dominated by large, high- velocity metal cylinders containing steel teeth with no temperature controls installed, and increasing amounts of "short shoddy fibers" created in the market, which have belied the fact that his original observations have been ignored. Meinke addressed it with one less "swift" (tearing cylinder), five instead of six. In fact, in later embodiments by his own companies, it appeared that the focus was on speed, volume and less waste going through their "fabric tearing systems."

While focusing on quality rejuvenated fibers it is important to understand that heat sensitivity is important in dealing with all types of fibers. Cotton fibers are sensitive to heat and will therefore break and create shorter fibers and/or dust in the process. Allowing excessive heat while separating it into yarn pieces would be self-defeating in creating a quality end product. Should high temperatures be a factor in the rejuvenation of polypropylene fibers, polyester fibers or other heat sensitive fibers, they would fuse and result in poor performance and quality characteristics, along with production inefficiencies in downstream manufacturing, and hence in their particular consumer products.

The purpose of the apparatus and methods described herein is not necessarily to make fiber from the fabric, but rather to create yarn segments that can be softened and untwisted throughout the remainder of the process. In other embodiments in the prior art, single cylinders are used which are filled with "steel teeth" or "metal pins" that run at high speeds and are purposed to create fiber immediately and in a such a harsh manner that it creates short, dusty, nep filled fiber that is difficult to use in value oriented downstream applications. The apparatus described
herein is not focused on those applications, but rather on quality fiber with high efficiencies in downstream production.

The various components of the apparatus are described in more detail below.

### F eedbox/Hopper

The main requirements for the feedbox/hopper are that it can hold a desired amount of textile material to be treated, and deliver the material to a conveyor in a manner that is consistent with the speed at which the conveyor moves.

The initial feedbox is used for storing or gathering textile materials ready to be processed. In one embodiment, the feedbox/hopper is made of industrial grade steel. Although virtually any size hopper can be used, a reasonable commercial size for the initial feedbox is about 10 foot in overall height. Before being loaded into the feedbox/hopper, the textile materials to be processed are cut into sections that are approximately 2-3 inches in width and approximately 2-3 inches in length. The material can be stacked inside the feedbox/hopper.

The textile materials to be processed can be transferred from the initial feedbox to the feedbox conveyor using any suitable method, including using a spike apron or other such devices.

### Conveyors

Each of the treatment and deconstruction stations comprises an inlet conveyor. If the inlet conveyor does not traverse the entire length of a particular treatment or deconstruction station, then a further conveyor (an outlet conveyor) is present. In some embodiments, there are three conveyors, including the inlet conveyor, the outlet conveyor, and an intermediate conveyor. Where the process is to be repeated on at least a
portion of the textile materials after they have exited the outlet conveyor of the final treatment or deconstruction station, the textile materials can be recirculated through one or more of the treatment or deconstruction stations using a conveyor as part of a redeposit mechanism.

The inlet conveyor connects with or underlies the feedbox conveyor or an outlet conveyor of a previous treatment and deconstruction group, for conveying textile materials output from the feedbox conveyor or the outlet conveyor of the previous treatment and deconstruction group to the treatment station.

### Components Used to Apply Treatment Chemicals

Each treatment station comprises at least one conveyor, a plurality of nozzles, a vacuuming unit, and a pump, and optionally includes one or more of a condensation unit, a temperature regulating means, and a generator unit.

In one embodiment, one or more treatment stations are made of coated steel, stainlesssteel, or combinations thereof.

In one embodiment, the treatment station conveyor connects with the inlet conveyor and extends throughout the treatment station to convey textile materials from a first end of the treatment station to a second end of the treatment station.

In one embodiment, the conveyor on which the textile material to be treated lies as it is passed under the nozzles is in form of a stainless steel mesh. This allows for the treatment compositions delivered by the nozzles to pass through the textile materials, and then through the mesh on the conveyor.

The one or more nozzles are disposed above the. treatment station conveyor, and are capable of delivering treatment compositions to textile materials on the treatment station conveyor in atomized steam form, in a mist form, in liquid form, in spray form, and the like.

The size of the nozzles can be based on the flow of solution required by the water, or the combination of water and conditioners, required by the process. For example, operating at 100 bar and 1450 PSI, the average droplet size is typically around 25-50 micrometers, and has an 80% distribution. Operating at 80 bar at 160 PSI can deliver the same distribution results of water droplets. Those of skill in the art can readily determine the size of the nozzles.

The vacuuming unit is disposed below the conveyor, and the vacuum can draw the treatment composition through the textile materials on the conveyor. The vacuuming unit can comprise a vacuum pump and/or a condensation coil.

In the case of using the condensation coil as the vacuuming unit, natural vacuum is accomplished by the condensation of steam at the condensation coil; since the volume of steam is approximately 1,000 times that of water, when the steam condenses back into water, a natural vacuum is created at the area where the condensation occurs.

In the case of using a vacuum pump as the vacuuming unit, a more precise vacuum can be maintained. For this reason, the vacuum pump can be preferred over the condensation coil.

The pump is for pumping a designated treatment composition (which can be designated by the central computer unit) at a designated rate of speed to the one or more nozzles. In one embodiment, the pump is in form of a recirculating pump of sufficient size to maintain pressure and flow rates for effective water atomization for steam.

A variety of pumps can work successfully in this scenario, including, but not limited to, centrifugal, reciprocating, gear, positive displacement, etc.

### Condensation Collection Unit

A condensation collection unit can optionally be present to collect condensates in the treatment station resulting from condensation of the treatment compositions delivered from the nozzles.

### Temperature Measuring and Regulation

In each treatment station, the temperature is ideally regulated. The temperature of the catalytic vapor within the units can range from 100°C to 200°C, dependent on the application. At this stage in the production of synthetics such as polyester, polypropylene or nylon, cool mist vapor is utilized with the softening agent incorporating wick or ultrasonic technology to reduce the static electricity associated with these fabrics.

Temperature regulating means regulate the temperature of the treatment station. The temperature inside the treatment station can be monitored using one or more temperature gauges, thermocouples, thermometers, and/or thermostats. The temperature within each treatment station can be controlled, for example, using water, air, a refrigerant, and the like, which can be passed, for example, through heating and/or refrigeration units, including heat pumps.

### Generator Units

Optionally, the apparatus can include a generator unit. The generator unit connects with the condensation collection unit to use the condensates collected in the condensation collection unit to generate steam power. This power can be used to power operation of the treatment station.

The benefits of using the condensation collection unit and the generator unit are twofold. First, the water returned by the condensate system, which has previously been chemically treated, can be reused as boiler feed-water within the process steam system. This lowers the cost
of treating new boiler feed-water. Secondly, the thermal gain of using condensate water instead of makeup boiler feed-water reduces energy consumption since the temperature of condensate water is considerably higher than makeup water. The cost savings from not having to purchase, heat or treat the boiler makeup water often make investments in condensate recovery systems economically feasible and, overall, sustainable.

### Treatment Compositions

The treatment composition may be a catalyzed vapor which softens and relaxes twists of the waste materials; the catalyzed vapor may be a cellulase enzyme, a surfactant, or a silicone treatment, depending on the type of textile materials to be treated; or an organic agent which strengthens yarn element of the textile materials for further processing, e.g. a surfactant in the case of deconstructing a cotton fabric, a complex catalyzed vapor that includes a poly (vinylamine-vinylformamide) copolymer with a carrier in the case of deconstructing a natural hair fabric like cashmere, a complex catalyzed vapor that includes a poly (vinylamine- vinylformamide) copolymer with a carrier in the case of deconstructing polyester, nylon or polypropylene fiber, or an anti-microbial application or a biocide.

The treatment station serves different purposes for each section and each type of fabric that is being presented. For example, cotton requires the addition of moisture along with a softener to its fiber at this stage.

A catalyzed silicone vapor could be one of the many selections used for cotton in this instance such as Softycon's SHP-C, Sofytcon's TRN or Rexamine CP 9194 AL. Other choices include cellulase enzymes, surfactants or other silicone softening treatments.

In the case of rayon fabrics, the catalyzed vapor can include a softener, which can be, for example, a blend of a non-ionic softeners such as alkyl polyethanoxyether or a polyoxyethylene alkyl ether. However, the
application of water is not as critical here.

Products which have proven to be successful as part of the catalyzed vapor technology for these fabrics have been Perrustol CCF, Perrustol CCA or Softycon's RWT

### Maintaining Moisture Content

The ideal moisture content throughout the deconstruction process is in the range of about 7% to about 20% by weight of the textile material, and is more typically approximately 14% by weight.

If the fibers break or become frayed during deconstruction, their quality will be compromised downstream. Therefore, throughout the deconstruction and refining processes described herein, it can be important to monitor the moisture levels, and add humidity to the material/yarn/fibers and maintain temperature control in order to eliminate short fibers and dust, which comes from dry or mechanically-abused fiber.

The intermediate conveyor connects with the treatment station conveyor to convey textile materials from the second end of the treatment station to the deconstruction station.

### Deconstruction Stations

Each deconstruction station comprises a two or more rotary drums. The rotary drums and each have a curvilinear surface disposed with a plurality of rows of cutting needles.

The cutting needles each have a cutting portion having at least one cutting edge oriented to face a direction where the textile materials are conveyed to the first rotary drum and the other rotary drums to slice into the textile materials and deconstruct the textile materials without damage to fibers of the textile materials, and a flat shaped base portion below the cutting edge portion for connecting the cutting needles to the first rotary drum and the other rotary drum respectively.

The rotary drums are disposed on top of and facing the rotary drums with the rows of cutting needles on the curvilinear surfaces of the rotary drums and the subsequent rotary drums interpose with each other. The rotary drum are driven to rotate in opposite directions at a designated speed to pass the textile materials there between so that the cutting needles penetrate the textile materials and cut through to yarn segments dividing the yarn segments into long pieces of yarn.

The spacing between the cutting needles in each of the plurality of rows of cutting needles of a subsequent deconstruction station is less than that of a previous deconstruction station, so that each subsequent deconstruction station delivers finer yarn segment. The process can be continued, for example, until single soft yarn segments are delivered at a final treatment or deconstruction station.

### Temperature Control

Temperature control can be an important part of the successful deconstruction and treatment of textile materials. High heat has been proven to denigrate fiber quality. Yet in all other recycling and fiber regeneration embodiments, while heat is occasionally addressed and larger cylinders with steel teeth are built, they are still done so with metal "pins and lags" which are running at high velocity for increased productivity and, on information and belief, are never temperature controlled.

It can be important to constantly and/or consistently monitor the temperature of the rotary drums in all the deconstruction stations, and ensure that when the temperature is too high, they are cooled, for example, using air, water or a refrigerant, relative to the composition of the raw material. For these reasons, a temperature controlling means is ideally disposed inside each of the first rotary drum and the second rotary drum which monitors and controls temperature of the first rotary drum and the second rotary drum at a designated level.

In one embodiment, the temperature controlling means of the rotary drums comprises a core inside each of the drums which are cooled by water, air, refrigerant or the like. Temperature regulating means regulate the temperature of the treatment station. The temperature inside the treatment station can be monitored using one or more temperature gauges, thermocouples, thermometers, and/or thermostats. The temperature within each treatment station can be controlled, for example, using water, air, a refrigerant, and the like, which can be passed, for example, through heating and/or refrigeration units, including heat pumps.

In the case of cotton, it begins to degrade and/or break at a temperature of 248°F relative to the heat factor alone; its mechanical manipulation notwithstanding. Polypropylene begins to melt at a temperature of 150°F and if a fabric contains a low-melt polyester, it can have a melt point of 110°F or less. Therefore, it is desirable to maintain an average temperature of around 98°F in the rotating drums, though the temperature can go up to around five to ten degrees below the melting point of the particular fiber being treated, where the temperature can be adjusted depending on the fiber being treated, and fall below around 50°F, preferably below around 80°F.

The rotary drums disposed with the cutting needles of the present invention rotate counter clockwise to maximize the amount of yarn sections that are able to be separated. They are, ideally, cooled in order to reduce heat built up during rotation, thus keeping the surfaces cool so as not to tear, break or otherwise damage any of the materials during the process. It cannot be overstated that in order to achieve a usable fiber in a high level application, strict attention must be paid to the level of exposure to high temperature in the process. Temperature gauges can be installed on the rotary drums to monitor and control their external temperature and assure the correct adjustment in order to keep fiber stress to a minimum.

### Chemical Treatment Following Initial Deconstruction

After being subjected to an initial deconstruction station, and a chemically treatment in an initial treatment section, in no particular order, the textile materials can be conveyed to a second deconstruction station, where the needles on the rotary drums are grouped closer together and the same action takes place. This tends to create fewer and longer yarn segments. The process can be repeated in further deconstruction stations, where the needles on the rotary drums are grouped even closer together, and so on, until single soft yarn segments are produced at the end of the process.

### Outlet Conveyor

The outlet conveyor connects with the inlet conveyor of a subsequent treatment and deconstruction group or an output storage box, for conveying textile materials output from the deconstruction station to the subsequent treatment and deconstruction group or the output storage box.

### Redeposit Mechanism

The purpose for the optional redeposit mechanism at the outlet conveyor is to separate the textile materials on the outlet conveyer into a first group comprising textile materials relatively lighter in weight or density and a second group comprising textile materials relatively heavier in weight or density, transfers the second group of textile materials to a designated previous treatment and deconstruction group, and transfers the first group of the textile materials to a subsequent treatment and deconstruction group or the output storage box.

In one embodiment, the redeposit mechanism comprises a covered area at the outlet conveyor of each treatment and deconstruction group disposed with a suctioning means disposed at a top end of the covered area and a removing means, and while the outlet conveyor is temporarily stopped at the covered area, the suctioning means is first switched on to suction the textile materials on the outlet conveyor which are light in weight towards the top end of the covered area, leaving the textile materials which are heavy in weight on the outlet conveyor for removing by the removing means to a backward conveyor which conveys the textile materials thereon to a designated previous treatment and deconstruction group where they are allowed to be reconditioned and deconstructed into a fibrous state, and the suctioning means is then switched off to release the suctioned light weight textile materials to the outlet conveyor for conveying to subsequent destination.

### Centralized Computer Control

While the entire process can be handled manually, it can also be controlled via a computer. A centralized computer controller can be used to control one or more of the type and the rate of speed of the treatment compositions delivered by the nozzles, the size of the cutting blades, the temperature of the first rotary drum and the second rotary drum, the speed of rotation of the first rotary drum and the second rotary drum on the basis of the composition of the fabrics.

Those of skill in the art can readily program a computer to handle these process steps.

### Representative Embodiment

In one embodiment, there are four treatment and deconstruction groups, but there can certainly be more or less in actual production based on the specific requisites of the select fabric group in an operating plant environment.

For the purpose of this illustration, and many other scenarios encompassing a broad spectrum of fabric deconstruction, individual treatment and deconstruction groups can be used in the following manner.

In the first treatment station, a softener can be applied and surface chemicals present on the textile material to be treated can be removed from the textile materials in a cleansing stage.

For example, in the case of cotton, these surface chemicals often include starches, waxes, anti-crease finishes, hydrophobic finishes, and the like. In the case of synthetics, the finishes often include polycarboxylic acids (PCA), acrylic sizing agents, oiling waxes or silicone based lubricants, and combinations thereof.

The softener used in the instant process can act to soften the surface of the fabric in a controlled environment, in order to relax it so that the deconstruction process can be more effective and less invasive.

In a subsequent treatment station, a further chemical can be used to strengthen the yarn segments as they are being deconstructed. This can help maintain the integrity of the fibers therein. Para-KRC from the Kunal Group is an excellent product that can be used to increase tear and tensile strength for silk.

Multiple surfactants can be used for cotton, and a product similar to Avco-Soft PE is excellent when catalyzed for PVA in this area of the process.

A product using a poly (vinylamine-vinylformamide) copolymer with a carrier can be used to improve the strength of fibers that have been weakened, for example, as a result of mechanical stress in the case of a natural hair collection such as cashmere.

These strengthening treatments can be used to increase the tensile strength of the treated fibers, relative to untreated fibers.

In one embodiment, a further treatment includes the application of an antimicrobial agent, which is particularly useful if the downstream product is going to be used in the healthcare, medical, personal care or baby products industries. While it is not necessarily the final process in the system, it is a strategic stage to pretreat for microbial protocols.

If in a downstream application it is necessary for a particular fiber to have a hydrophobic property, a pre-treatment can be applied in a treatment station. If in a downstream application it is important for a particular fiber to have a more hydrophilic nature, a pre-treatment can be applied in a treatment station.

Due to the nature of this technology and its importance in high quality downstream applications, there are many catalytic vapors (treatment chemicals) that can be delivered to improve the performance of the end use fibers during this stage of the process.

In the deconstruction station of each treatment and deconstruction group, there are two rotary drums which are cooled as described above and are populated with sleeves of industrial cutting needles designed specifically for the deconstruction of this fabric into yarn segments. The rotary drums vary in size based on the width of the line, and the width of the line determines the production capacities.

In a representative embodiment of a line producing approximately 2,500 pounds per hour, in one aspect of this embodiment, the rotary drums are approximately 500 mm in diameter and approximately 2,500 mm wide. Each such rotary drum can hold from 20,000 to 120,000 industrial cutting needles, which deconstructs the textile materials passing through the rotary drums as they are prepared for further fiber refinement.

As the yarn segments pass through the deconstruction stations, the cutting needles are designed so that their function is very specific, taking the textile material through each stage of the process.

For example, in the initial stage prior to surface cleansing, the textile material can be penetrated by the cutting needles in preparation for its cleansing by enzymes and chemicals. The textile material can then be treated, for example, with softening agents. After the textile material has been softened and the yarn segments begin to be exposed, there is still the visible presence of textile material that must be penetrated and separated into yarn.

A further deconstruction station is typically the section where the cutting needles begin to separate the yarn segments which yields no trace of actual textile material present, only yarn segments.

By the time the segments reach the fourth or subsequent deconstruction station (dependent, of course, on the type of fabrics being rejuvenated), the yarn segments will have been properly softened and strengthened, prepared for downstream processing, and ready to be delivered to the output storage box prior to subsequent fiber refinement processing.

The apparatus can be used in treatment and deconstruction methods which convert discarded textile materials into fibers that compete or surpass the quality in the marketplace with that of their virgin counterparts. If desired, during each stage, individual soft yarns can be moved out of the apparatus, where they can be stored, or sent on to receive further refinement. Heavier fabric pieces can be moved forward through the mechanical process until they have been deconstructed into soft yarn elements. If there are elements of textile material that are not properly separated into yarn segments during each stage of the process, they can be redeposited to an earlier stage in the process.

If sufficient yarn separation has not occurred, for example, by the fourth stage of the process, the elements of the textile material can be re- deposited into the second treatment and deconstruction group. Should the separation be inadequate in the third stage of the process, the elements of textile material can be re-deposited into the initial feedbox so as to prevent any unnecessary fiber breakage after the fabric has been deconstructed. The mechanical process to untwist the fibers can become more aggressive at this stage, so it can be important to strengthen the fibers so there is no degradation.

While not wishing to be bound to a particular theory, it is believed that the success of this technology depends on the maintenance of the length and the strength of the fibers at each stage of the process, and this is ultimately achieved by having a Stage Gate Process which revolves around mechanical, chemical and vapor techniques.

To emphasize, when working with cotton or other natural fibers, the strength of the fibers can be increased by adding warm, moist treatments, which penetrate the fabric and ensure that it is not being weakened, and that additional breakage is not created during the process.

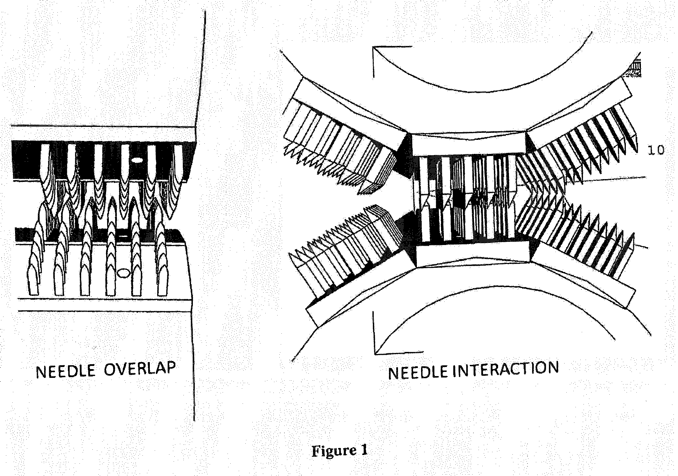

The interaction of rotary drums in the deconstruction unit will be better understood with reference to Figure 1. As shown in Figure 1, needles (10) on each of the rotary drums overlap with and interact with each other as textile materials are passed between them. This enables the textile materials to be split into individual yarns.

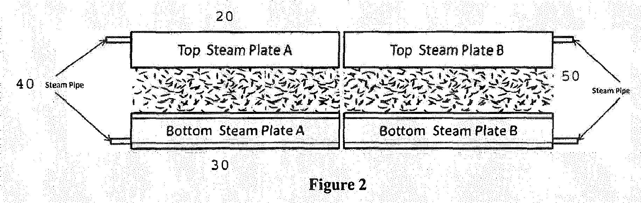

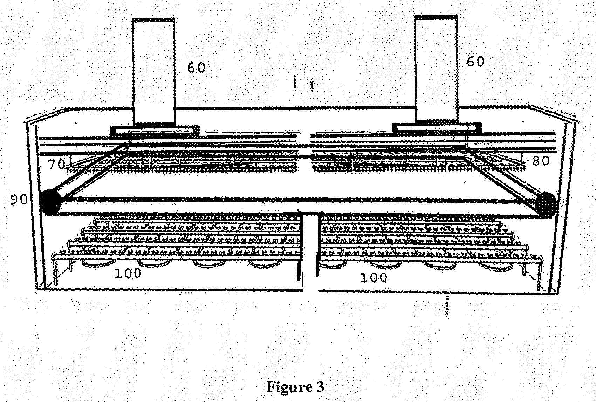

One embodiment of application of steam in the treatment station is shown in Figure 2 . Top and bottom steam plates (20 and 30, respectively) are connected to steam pipes (40), and these are disposed above and below textile material to be treated (50). One embodiment of the treatment station is shown in Figure 3 . Hydraulic presses (60) are used to apply pressure to nozzles which are used to apply steam (70) or treatments (80) to the textile materials to be treated. The materials to be treated are passed along a conveyor (90). Coils (100) for passing a fluid capable of heating or cooling the treatment station are present at the bottom of the treatment station.

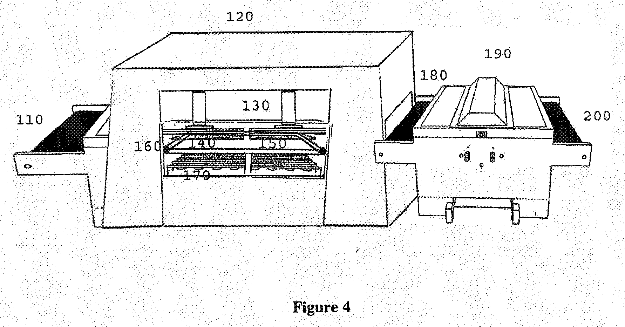

One embodiment of the apparatus comprising a treatment station and a deconstruction station is shown in Figure 4. An inlet conveyor (110) is used to convey textile materials to the treatment station (120), which station comprises hydraulic presses (130), nozzles which apply steam (140) or treatments (150) overly a porous conveyor (160), and coils (170) for passing a fluid capable of heating or cooling the treatment station are present at the bottom of the treatment station. Another conveyor (180) conveys treated textile material from the treatment station (120) to a deconstruction station (190), where rotary drums such as those shown in Figure 1 are housed, between which the treated textile materials are deconstructed. Following deconstruction, the deconstructed, treated material is conveyed out of the deconstruction station (190) through an exit conveyor (200).

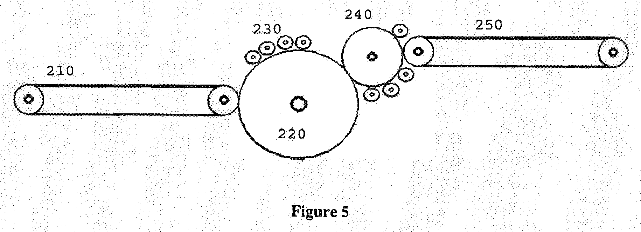

One embodiment of the inner workings of a deconstruction station shown in Figure 4 is shown in Figure 5 . As shown in Figure 5, an in-feed conveyor (210) conveys textile material to be treated (not shown) to a main rotary cylinder (220), which interacts with auxiliary rotary cylinders (230) and a secondary rotary cylinder (240). The secondary rotary cylinder (240) also interacts with auxiliary rotary cylinders (230). Each cylinder includes a plurality of cutting needles (shown in Figure 1) which act to deconstruct the textile material. Following deconstruction, the material passes to an out-feed conveyor (250).

According to the above disclosure, a person skilled in the art may make suitable modifications and changes to the above embodiments. Therefore, the present invention is not limited by the above disclosure and the embodiment described. Modifications and changes to the present invention should fall within the scope of the present invention as defined by the claims. Besides, although certain technical terms have been used throughout the specification, the technical terms are intended for ease of explanation and are not intended to restrict the present invention in any ways.

## Claims

1. An apparatus for treating textile waste materials, comprising:
a porous conveyor belt adapted to convey textile materials to be treated,
a first zone for applying steam to textile materials to be treated, comprising at least one nozzle either above a location where the textile materials would be conveyed, below the porous conveyor belt at a location where the textile materials would be conveyed, or both
a second zone for applying one or more chemical or enzymatic treatments to textile materials to be treated, comprising:
at least one nozzle either above a location where the textile materials would be conveyed, and a vacuum system below the porous conveyor belt at a location where the textile materials would be conveyed, o
at least one vacuum system either above a location where the textile materials would be conveyed, and at least one nozzle below the porous conveyor belt at a location where the textile materials would be conveyed.

2. The apparatus of Claim 1, further including a pump for pumping a desired treatment composition through the nozzle(s).

3. The apparatus of Claim 1, further comprising a central computer unit or central processing unit/CPU, which can control one or more of the amount of steam, the type of chemical and/or enzyme to be applied to the textile materials, and the deposition rate of the chemical and/or enzyme to be applied to the textile materials.

4. The apparatus of Claim 1, further comprising a condensation collection unit.

5. The apparatus of Claim 1, further comprising a temperature regulating means to regulate the temperature of the treatment station.

6. The apparatus of Claim 5, wherein the temperature regulating means comprises one or more temperature gauges, thermocouples, thermometers, thermostats, refrigerants, refrigeration units, or heating units.

7. The apparatus of Claim 1, further comprising a generator unit.
